# EUROPÄISCHE PATENTSCHRIFT

(11) **EP 3 764 266 B1**
(45) Veröffentlichungstag und Bekanntmachung des Hinweises auf die Patenterteilung: **11.09.2024**
(21) Anmeldenummer: 19185983.4
(22) Anmeldetag: 12.07.2019
(51) Int. Cl.: H04L 9/00, H04L 9/32, G06F 21/64

(54) **VERFAHREN UND VORRICHTUNG ZUM HANDELN AUF EINER ELEKTRONISCHEN HANDELSPLATTFORM**
METHOD AND DEVICE FOR TRADING ON AN ELECTRONIC TRADING PLATFORM
PROCÉDÉ ET DISPOSITIF DE COMMERCE SUR UNE PLATEFORME DE COMMERCE ÉLECTRONIQUE

(43) Veröffentlichungstag der Anmeldung: 13.01.2021
(73) Patentinhaber: Robert Bosch GmbH, 70442 Stuttgart (DE)
(72) Erfinder: Scharmann, Nik, 74321 Bietigheim - Bissingen (DE); Winzer, Fredrik, 71229 Leonberg (DE); Kramer, Denis, 71701 Schwieberdingen (DE)

(56) Entgegenhaltungen:
- DE-A1- 102017 209 014
- US-A1- 2017 161 829
- ELI BEN SASSON ET AL: "Zerocash: Decentralized Anonymous Payments from Bitcoin", 2014 IEEE SYMPOSIUM ON SECURITY AND PRIVACY, 1 May 2014 (2014-05-01), pages 459 - 474, XP055538553, ISBN: 978-1-4799-4686-0, DOI: 10.1109/SP.2014.36
- BEIMEL AMOS ED - LEE SEONG-WHAN ET AL: "Secret-Sharing Schemes: A Survey", 30 May 2011, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 11 - 46, ISBN: 978-3-540-74549-5, XP047378917

## Beschreibung

Die vorliegende Erfindung betrifft ein Verfahren zum Handeln auf einer elektronischen Handelsplattform. Die vorliegende Erfindung betrifft darüber hinaus eine entsprechende Vorrichtung, ein entsprechendes Computerprogramm sowie ein entsprechendes Speichermedium.

### Stand der Technik

Als dezentrales Transaktionssystem oder Transaktionsdatenbank (*distributed ledger*) wird jegliches Protokoll in Rechnernetzen bezeichnet, das eine Übereinkunft (*consensus*) hinsichtlich der Abfolge bestimmter Transaktionen herbeiführt, die beispielsweise die Aktualisierung von Daten betreffen. Eine häufige Ausprägung eines solchen Systems bedient sich einer Blockkette (*blockchain, block chain*)*.* Hierunter wird in der Kryptologie eine Datenbank verstanden, deren Integrität durch die Speicherung eines digitalen Fingerabdrucks (*hash*) des vorangehenden Datensatzes im jeweils nachfolgenden Datensatz gesichert wird. Diese kryptografische Verkettung bildet nach dem Stand der Technik die Grundlage vieler Kryptowährungen, kann jedoch auch in anderweitigen verteilten Systemen zur Erhöhung der Transaktionssicherheit beitragen.

DE102017209014A1 etwa offenbart ein Verfahren zum Anfügen von Transaktionen an eine Blockkette, bei welchem Teilnehmer des Rechnernetzes bestimmt werden, die in einer vorgegebenen Beziehung stehen, sogenannte Multiplikationstripel (*beaver triples, beaver's triples*) als unter den Teilnehmern geteiltes Geheimnis erzeugt werden, mindestens ein Multiplikationstripel unter den Multiplikationstripeln gemeinsam mit den Transaktionen auf einen Streuwert abgebildet wird und, falls der Streuwert einen vorgegebenen Zielwert unterschreitet, der Blockkette ein Block übergeben wird, welcher das auf den Streuwert abgebildete Multiplikationstripel sowie die Transaktionen enthält, und mittels der übrigen Multiplikationstripel eine sichere

Mehrparteienberechnung (*multi-party computation,* MPC) in dem Rechnernetz gesteuert wird. Einschlägige Protokolle werden vorgestellt in BEAVER, Donald. Efficient multiparty protocols using circuit randomization. In: Annual International Cryptology Conference. Springer Berlin Heidelberg, 1991. S. 420-432.

US 2017/161829 A1 offenbart ein Verfahren nach dem Oberbegriff des Anspruchs 1.

### Offenbarung der Erfindung

Die Erfindung stellt ein Verfahren zum Handeln auf einer elektronischen Handelsplattform, eine entsprechende Vorrichtung, ein entsprechendes Computerprogramm sowie ein entsprechendes Speichermedium gemäß den unabhängigen Ansprüchen bereit.

Dem erfindungsgemäßen Ansatz liegt die Erkenntnis zugrunde, dass moderne Marktplatz-Plattformen von einzelnen Großunternehmen betrieben werden. Die daraus resultierenden Wettbewerbsbeschränkungen können hohe Kosten für die Nutzer dieser Plattformen nach sich ziehen. Spieltheoretisch wurde etwa nachgewiesen, dass es im Interesse monopolistischer Plattformbetreiber liegt, ihre Position auf Kosten der Marktteilnehmer auszunutzen.

Da aus Sicht der Nutzer diese Art des Marktversagens nicht wünschenswert ist, wurden verschiedene Möglichkeiten vorgeschlagen, um den Betrieb einer solchen Plattform unter Aufrechterhaltung der erwünschten Marktplatz-Funktionalität zu dezentralisieren. Mit Hilfe von MPC ist es möglich, derlei Funktionen unter Nutzung eines dezentralen Protokolls zwischen den Teilnehmern zu implementieren, ohne einzelnen Teilnehmern einen ausnutzbaren Wissens- oder Machtvorteil zu verschaffen. Jedoch sind MPC-Protokolle besonders bei großen Nutzerzahlen sehr komplex. Daher beschränken sich MPC-Handelsplattformen herkömmlicherweise darauf, Marktplatz-Funktionalität für beliebig viele Parteien gemäß einem Protokoll zu implementieren, das lediglich von einem Teil dieser Parteien befolgt wird.

Die vorgeschlagene Lösung fußt ferner auf der Einsicht, dass es sich - ähnlich der dezentralen Geldschöpfung in Krypto-Währungssystemen, dem sogenannten Schürfen (*mining*) - für die Parteien eines MPC-Protokolls nur lohnt, den damit einhergehenden Berechnungsaufwand auf sich zu nehmen, wenn es einen Anreiz dafür gibt. Während in dezentralen Transaktionssystemen für erbrachte Arbeitsnachweise Belohnungen gezahlt werden, sind für MPC-basierte Marktplatz-Protokolle bisher keine technischen Systeme bekannt, welche einen Anreiz zur Befolgung dieser Protokolle bieten.

Ein erfindungsgemäßes Transaktionssystem trägt ferner dem Umstand Rechnung, dass es für eine MPC-Implementierung von Marktplätzen essenziell ist, dass das hierzu genutzte Protokoll keinerlei Geheimnisse preisgibt, sodass es unter Umständen schwierig ist, anhand einzelner Protokollnachrichten korrekte Berechnungen von Zufallswerten zu unterscheiden. Um die korrekte Berechnung einer Funktion nachzuweisen, ohne deren Eingangswerte preiszugeben oder die die Funktion erneut auszuführen, ist erfindungsgemäß vorgesehen, einen verifizierbaren kryptografischen Beweis für die Ausführung zu erbringen.

Eine Ausführungsform der Erfindung implementiert vor diesem Hintergrund eine dezentrale Marktplatz-Plattform mittels MPC und sogenannter kenntnisfreier (*zero-knowledge*) Beweise. Die Teilnehmer der MPC-Berechnung, welche unter Umständen kein eigenes Interesse an einem korrekten Ergebnis haben und daher plausible Zufallsnachrichten schicken könnten, weisen die Korrektheit ihrer Berechnung mit Hilfe eines derartigen kryptografischen Beweises nach. Ein Vorzug dieser Lösung gegenüber einer zentralen Marktplatz-Plattform liegt darin, dass sie ein Marktversagen durch Monopolisierung vermeidet.

Durch die in den abhängigen Ansprüchen aufgeführten Maßnahmen sind vorteilhafte Weiterbildungen und Verbesserungen des im unabhängigen

Anspruch angegebenen Grundgedankens möglich. So kann vorgesehen sein, dass die Teilnehmer mit Währungseinheiten (*tokens*) innerhalb des Systems belohnt werden. Dieselben Tokens werden für Zahlungen der Handelsteilnehmer innerhalb des Marktplatzsystems genutzt. Gegenüber reinen MPC-Ansätzen bietet eine solche Ausgestaltung einen Anreiz für korrekte Berechnungen und ist damit nicht auf den Altruismus der Protokollteilnehmer ohne konkretes Interesse am Ergebnis angewiesen.

Erfindungsgemäß ist vorgesehen, dass Auftragsdaten der auf der Plattform erteilten Handelsaufträge durch eine kryptografische Geheimnisteilung (*secret sharing, secret splitting*) in mehrere Teile aufgeteilt werden, die wiederum unter den MPC-Parteien verteilt werden, sodass letztere die Transaktionsdatenbank - unabhängig von einer aktiven Teilnahme an der eigentlichen Handelsplattform - gemäß dem Protokoll fortschreiben können. Somit kann auch für Nichtteilnehmer an der Handelsplattform ein Anreiz geschaffen werden, das Protokoll korrekt zu befolgen.

Gemäß einem weiteren Aspekt kann vorgesehen sein, dass nicht am Betrieb der Handelsplattform teilnehmende Parteien ihre Inputs (Handelsaufträge) auf die MPC-Parteien aufteilen. Somit ist für die Teilnahme am Marktplatz eine aktive Berechnung am MPC-Protokoll nicht zwangsläufig erforderlich.

Kurze Beschreibung der Zeichnungen Ausführungsbeispiele der Erfindung sind in den Zeichnungen dargestellt und in der nachfolgenden Beschreibung näher erläutert. Es zeigt:
Figur 1 das Flussdiagramm eines Verfahrens gemäß einer ersten Ausführungsform.
Figur 2 schematisch ein Transaktionssystem gemäß einer zweiten Ausführungsform.

### Ausführungsformen der Erfindung

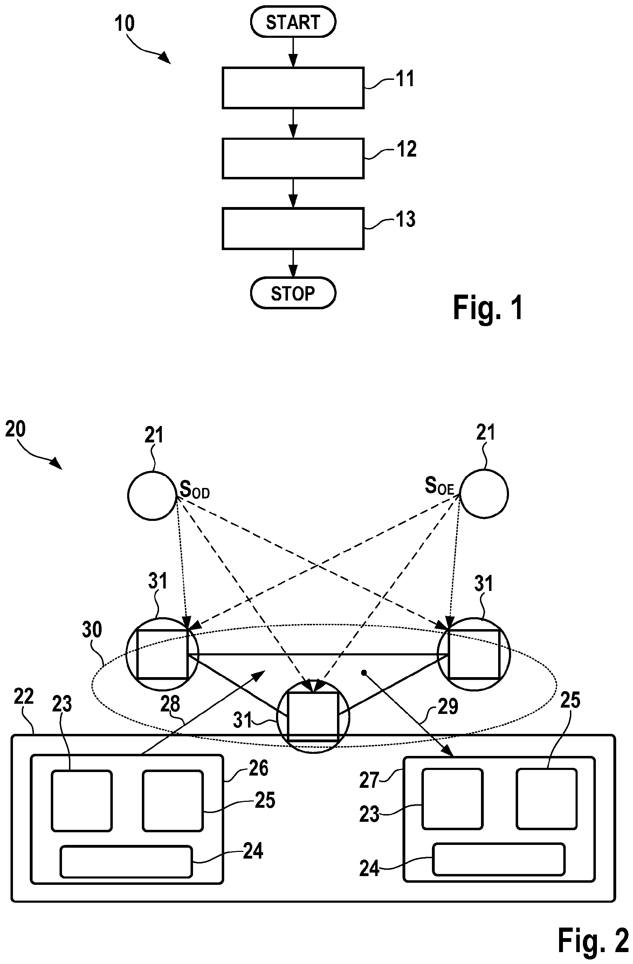

Figur 1 illustriert die grundlegenden Schritte eines erfindungsgemäßen Verfahrens (10) zur Anwendung in dem in Figur 2 dargestellten Transaktionssystem. Das System besteht aus Teilnehmern (21), die Aufträge (*orders*) und Angebote (offers) auf dem Marktplatz einstellen wollen (Prozess 11 - Figur 1), sowie - in der MPC-Fachliteratur traditionell mitunter als Spieler bezeichneten - Parteien (31), die ein Protokoll zur Durchführung der Marktplatz-Transaktionen im Wege einer Mehrparteienberechnung (30) befolgen. Diese Parteien (31) können gleichzeitig Teilnehmer (21) der Handelsplattform (20) selbst, jedoch ebenso unabhängige Dienstleister oder Privatpersonen sein. Die Teilnehmer (21) berechnen Teile (*s*_{OD}, *s*_{OF}) ihrer Aufträge bzw. Angebote und verteilen diese an die MPC-Parteien (31); dazu dient ein übliches Verfahren (10) wie es beispielsweise beschrieben wird in BEIMEL, Amos. Secret-sharing schemes: a survey. In: International Conference on Coding and Cryptology. Springer, Berlin, Heidelberg, 2011. S. 11-46.

Der zuvor genannte Schritt ist nur erforderlich, wenn die Teilnehmer (21) der Handelsplattform (20) und MPC-Parteien (31) nicht übereinstimmen.

Die MPC-Parteien (31) führen mit Hilfe der erhaltenen Teile (*s*_{OD}, *s*_{OF}) und des letzten Zustandes (26) einer für den Marktplatz verwalteten (Prozess 12 - Figur 1) Transaktionsdatenbank (22), insbesondere des sogenannten Orderbuches (23), die Mehrparteienberechnung (30) aus, wickeln auf diese Weise anhand der Aufträge und Angebote Transaktionen ab und berechnen den neuen Zustand (27). Die genaue Art der Abwicklung kann in Ansehung der gewünschten Eigenschaften des Marktplatzes und auf Grundlage der Sozialwahltheorie (*social choice theory*) als Funktion eines zentralisierten Mechanismus entworfen werden. Anschließend kann diese Funktion mit Hilfe eines bekannten Rahmenwerkes (*framework*) implementiert werden, etwa gemäß DAMGÄRD, Ivan, et al. Practical covertly secure MPC for dishonest majority - or: breaking the SPDZ limits. In: European Symposium on Research in Computer Security. Springer, Berlin, Heidelberg, 2013. S. 1-18.

Gemeinsam mit jeder Protokollnachricht wird optional der kenntnisfreie Beweis (25) für deren Korrektheit veröffentlicht. Nach der Befolgung des Protokolls erhält jede Partei für jeden korrekten Beweis (25) eine Belohnung in Form von Tokens.

Die neuen Salden (*balances*) der Konten (24) sowie der neue Zustand (27) des Marktplatzes werden in der Transaktionsdatenbank (22) abgelegt, die mit jeder Mehrparteienberechnung (30) erweitert und erneuert wird (Prozess 13 - Figur 1). Diese Konten teilen die Bezugswährung der Aufträge und Angebote, sodass jedem Teilnehmer (21) ein Konto zugeordnet werden kann.

Inhärente Eigenschaften der Mehrparteienberechnung (30) bestehen darin, dass das System fortexistiert, solange 50 % der MPC-Parteien (31) "ehrlich" sind, und dass diese Parteien (31) durch die Befolgung des Protokolls keine über die vorgesehene Vergütung hinausgehenden Informationen erhalten, die sie zu ihrem eigenen Vorteil nutzen könnten. Somit werden die MPC-Parteien (31) für ihre korrekte (und nur für ihre korrekte) Teilnahme an der Mehrparteienberechnung (30) belohnt.

Für das Verarbeiten von Aufträgen und Angeboten ist ein Gebührenmodell denkbar, das zusätzlich zu oder anstelle des Anreizsystems der MPC-Parteien (31) angewandt wird.

Dieses Verfahren (10) kann beispielsweise in Software oder Hardware oder in einer Mischform aus Software und Hardware implementiert sein.

## Patentansprüche

1. Verfahren (10) zum Handeln auf einer elektronischen Handelsplattform (20),
mit folgenden Merkmalen:
- Handelsaufträge von Teilnehmern (21) der Handelsplattform (20) werden erteilt (11),
- eine dezentrale Transaktionsdatenbank (22) der Handelsplattform (20) wird verwaltet (12), welche Daten und einen kenntnisfreien Beweis (25) für einen gegenwärtigen Zustand (26) der Transaktionsdatenbank (22) umfasst,
- anhand von Handelsaufträgen der Teilnehmer (21) wird die Transaktionsdatenbank (22) ausgehend vom gegenwärtigen Zustand (26) durch eine Mehrparteienberechnung (30) in einen neuen Zustand (27) überführt (13),
**gekennzeichnet durch** folgende Merkmale:
- die Daten umfassen ein Orderbuch (23) und Salden (24) von Konten der Teilnehmer (21),
- Auftragsdaten der Handelsaufträge werden durch eine kryptografische Geheimnisteilung in mehrere Teile (*s*_{OD}, *s*_{OF}) aufgeteilt,
- die Teile (*s*_{OD}, *s*_{OF}) werden unter Parteien (31) der Mehrparteienberechnung (30) verteilt,
- der gegenwärtige Zustand (26) wird von den Parteien (31) gelesen (28) und
- der neue Zustand (27) wird von den Parteien (31) geschrieben (29).

2. Verfahren (10) nach Anspruch 1,
**gekennzeichnet durch** folgendes Merkmal:
- die Teilnehmer (21) umfassen Käufer und Verkäufer.

3. Verfahren (10) nach Anspruch 1 oder 2,
**gekennzeichnet durch** folgendes Merkmal:
- für die Mehrparteienberechnung (30) wird eine Vergütung an die Parteien (31) entrichtet.

4. Verfahren (10) nach Anspruch 3,
**gekennzeichnet durch** folgendes Merkmal:
- die Vergütung erfolgt in einer Bezugswährung der Konten.

5. Verfahren (10) nach Anspruch 4,
**gekennzeichnet durch** folgendes Merkmal:
- die Bezugswährung ist eine Kryptowährung.

6. Verfahren (10) nach einem der Ansprüche 1 bis 5,
**gekennzeichnet durch** folgende Merkmale:
- die Parteien (31) der Mehrparteienberechnung (30) sind die Teilnehmer (21) der Handelsplattform (20).

7. Computerprogramm, welches eingerichtet ist, das Verfahren (10) nach einem der Ansprüche 1 bis 6 auszuführen.

8. Maschinenlesbares Speichermedium, auf dem das Computerprogramm nach Anspruch 7 gespeichert ist.

9. Vorrichtung, die eingerichtet ist, das Verfahren (10) nach einem der Ansprüche 1 bis 6 auszuführen.

## Claims

1. Method (10) for trading on an electronic trading platform (20), having the following features:
- trade orders of subscribers (21) of the trading platform (20) are placed (11),
- a decentralized transaction database (22) of the trading platform (20) is managed (12), said transaction database comprising data and a zero-knowledge proof (25) of a present state (26) of the transaction database (22),
- on the basis of trade orders of the subscribers (21), proceeding from the present state (26), the transaction database (22) is converted (13) into a new state (27) by a multi-party computation (30), **characterized by** the following features:
- the data comprise an order book (23) and balances (24) of accounts of the subscribers (21),
- order data of the trade orders are split into a plurality of parts (*s*_{OD}, *s*_{OF}) by cryptographic secret sharing,
- the parts (*s*_{OD}, *s*_{OF}) are distributed among parties (31) of the multi-party computation (30),
- the present state (26) is read (28) by the parties (31), and
- the new state (27) is written (29) by the parties (31) .

2. Method (10) according to Claim 1,
**characterized by** the following feature:
- the subscribers (21) comprise buyers and sellers.

3. Method (10) according to Claim 1 or 2, **characterized by** the following feature:
- a remuneration is paid to the parties (31) for the multi-party computation (30).

4. Method (10) according to Claim 3,
**characterized by** the following feature:
- the remuneration is given in a reference currency of the accounts.

5. Method (10) according to Claim 4,
**characterized by** the following feature:
- the reference currency is a cryptocurrency.

6. Method (10) according to any of Claims 1 to 5, **characterized by** the following features:
- the parties (31) of the multi-party computation (30) are the subscribers (21) of the trading platform (20).

7. Computer program configured to carry out the method (10) according to any of Claims 1 to 6.

8. Machine-readable storage medium on which the computer program according to Claim 7 is stored.

9. Device configured to carry out the method (10) according to any of Claims 1 to 6.

## Revendications

1. Procédé (10) de négociation sur une plate-forme de négociation électronique (20), ayant les caractéristiques suivantes :
- des ordres de négociation sont passés (11) par des participants (21) de la plate-forme de négociation (20),
- une base de données de transactions décentralisée (22) de la plate-forme de négociation (20) est gérée (12), laquelle comprend des données et une preuve sans connaissance (25) d'un état actuel (26) de la base de données de transactions (22),
- à l'aide d'ordres de négociation des participants (21), la base de données de transactions (22) est transférée (13), en partant de l'état actuel (26), dans un nouvel état (27) par un calcul multipartite (30), **caractérisé par** les caractéristiques suivantes :
- les données comprennent un carnet d'ordres (23) et des soldes (24) de comptes de participants (21),
- les données d'ordre des ordres de négociation sont divisées en plusieurs portions (*s*_{OD}, *s*_{OF}) par un secret réparti cryptographique,
- les portions (*s*_{OD}, *s*_{OF}) sont distribuées entre les parties (31) du calcul multipartite (30),
- l'état actuel (26) est lu (28) par les parties (31) et
- le nouvel état (27) est écrit (29) par les parties (31) .

2. Procédé (10) selon la revendication 1,
**caractérisé par** la caractéristique suivante :
- les participants (21) comprennent des acheteurs et des vendeurs.

3. Procédé (10) selon la revendication 1 ou 2, **caractérisé par** la caractéristique suivante :
- pour le calcul multipartite (30), une rémunération est versée aux parties (31).

4. Procédé (10) selon la revendication 3,
**caractérisé par** la caractéristique suivante :
- la rémunération est effectuée dans une devise de référence des comptes.

5. Procédé (10) selon la revendication 4,
**caractérisé par** la caractéristique suivante :
- la devise de référence est une cryptomonnaie.

6. Procédé (10) selon l'une des revendications 1 à 5, **caractérisé par** les caractéristiques suivantes :
- les parties (31) du calcul multipartite (30) sont les participants (21) de la plate-forme de négociation (20) .

7. Programme informatique, lequel est conçu pour mettre en œuvre le procédé (10) selon l'une des revendications 1 à 6.

8. Support de stockage lisible par machine, sur lequel est enregistré le programme informatique selon la revendication 7.

9. Dispositif, qui est conçu pour mettre en œuvre le procédé (10) selon l'une des revendications 1 à 6.
